(19) **Europäisches Patentamt**
**European Patent Office**
**Office européen des brevets**

(11) **EP 3 715 763 B1**

(12) **EUROPEAN PATENT SPECIFICATION**

(45) Date of publication and mention
of the grant of the patent:
**07.05.2025 Bulletin 2025/19**

(21) Application number: **20165527.1**

(22) Date of filing: **25.03.2020**

(51) International Patent Classification (IPC):
**F28D 7/00** *(2006.01)* **F28F 1/00** *(2006.01)*

(52) Cooperative Patent Classification (CPC):
**F28D 7/106; F28D 21/0012; F28F 1/003;**
**F28F 9/0246; F28F 13/12; F28F 21/06;**
**F28F 21/062; F28F 21/067; F28F 21/085;**
F28F 2265/16; F28F 2270/00; Y02B 30/56

(54) **HEAT EXCHANGING DEVICE**

**WÄRMEAUSTAUSCHVORRICHTUNG**

**DISPOSITIF D'ÉCHANGE THERMIQUE**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.03.2019 CA 3037942**

(43) Date of publication of application:
**30.09.2020 Bulletin 2020/40**

(73) Proprietor: **Ipex Technologies Inc.**
**Oakville, Ontaro L6H 1A7 (CA)**

(72) Inventor: **PATEL, Anjalkumar Ashokbhai**
**Toronto, Ontario M3L 0E2 (CA)**

(74) Representative: **Grünecker Patent- und**
**Rechtsanwälte**
**PartG mbB**
**Leopoldstraße 4**
**80802 München (DE)**

(56) References cited:
**WO-A1-2009/021328** **JP-A- 2008 107 013**
**NL-C1- 1 028 773** **US-A1- 2017 167 804**
**US-A1- 2018 187 980**

## Description

FIELD OF THE INVENTION

This invention relates to heat exchanging devices, and more particularly heat exchanging device for use to exchange heat between fluids, including but not limited to fluids such as grey water or waste water and clean water. More particularly, this invention relates to a hybrid heat exchanging device which can exchange or recover heat between warm waste water and cold fresh water and detect a potential breach of the fluids therein. In particular, the present invention relates to a heat exchanging device as defined in the preamble of claim 1, and as illustrated in US 2017/167804.

BACKGROUND OF THE INVENTION

In the past, devices for exchanging or recapturing heat between two fluids have been well known for many years and widely used throughout various industries and in commercial and residential environments. In general, these type of fluid heat exchanging or recovery devices involve two fluids passing in separate conduits and having at least one surface in thermal contract therebetween to exchange heat between the respective fluids without intermixing the fluids.
There is also need for practical, efficient and economical heat exchange units which meet applicable plumbing standards and building codes in order to be legally permitted and widely installed. Many such plumbing standards and building codes require some type of mechanism to prevent intermixing of the fluids and/or detect potential leaks.
Thus, there is a need for an economical and efficient heat exchanging device which permits the exchange of heat between fluids, such as waste water and clean water, which can also detect a potential breach by either of the two fluids before an undesirable and potentially unsanitary mixing of the fluids.

SUMMARY OF THE INVENTION

Accordingly, it is an object of this invention to at least partially overcome some of the disadvantages of the prior art. Also, it is an object of this invention to provide an improved type of heat exchange device to recover heat from waste water. In one aspect, it is also an object of the invention to provide an improved type of heat exchange device which can exchange heat between fluids and detect potential breaches by the fluids.
Accordingly, in one aspect of the present invention, there is provided a heat exchanging device according to claim 1.
Accordingly, in one aspect of the present invention, there is provided a heat exchange device having a first conduit including a double wall construction having an inner wall and an outer wall, the outer wall positioned concentrically radially outwardly from the inner wall and fixed thereto defining a plurality of leak channels therebetween. In a preferred embodiment, the double wall construction of the first conduit may be accomplished with a copper "pipe in pipe" design. The plurality of leak channels may be formed by creating grooves on the outside surface of the inner wall, and/or, the inside surface of the outer wall. In this way, fluid which may have breached the inner wall or outer wall will be conveyed through the leak channels and be detected before breaching the other wall and causing contamination of the fluids.
In a further advantage of the present invention, the heat exchange device acts as a heat recovery device and is oriented vertically, such that the first fluid, which may generally be warm drain water or grey water, is conveyed through gravity flow. Similarly, any leak fluid in one or more of the plurality of leak channels, whether from the first fluid or the second fluid, may also be conveyed through gravity flow and be detected. This involves a simpler and more robust design which does not rely on external power sources or water pressure to detect leaks. In particular, by having any leak fluid conveyed in the leak channels though gravity flow, a potential leak may be detected even if other utilities, such as electrical power or water pressure, are non-operational.
In a further preferred embodiment, a baffle is used to create turbulence inside the heat exchange unit. Typically, the baffle would be used for the clean water which is under pressure in the second conduit. The baffle increases the turbulent flow, and therefore heat exchange, between the first fluid and the second fluid across the double walled first conduit.
O-rings may be used for positioning and sealing the second conduit with respect to the first conduit. This permits efficient retrofitting of the heat exchanging device to existing drain water lines. Furthermore, this avoids the need for manual welding operations which can increase the cost of installation.
A further advantage of the present invention is that the double wall construction, and/or, at least one wall, of the first conduit may extend axially beyond the second conduit, to permit simple coupling to existing drain pipes. This permits mechanical joint couplings to be used rather than more complicated and expensive couplings. Furthermore, the inner wall of the double wall first conduit may be similar in construction to a drain waste vent (dwv) copper pipe, meaning that it has a similar diameter and structure, to decrease any interference on the flow of the waste fluid, which in a preferred embodiment is gravity fed drain water.

A further advantage of the present invention is that the second fluid, which in a preferred embodiment is clean or fresh water under pressure, may travel in an upward direction from the lower end of the device to the upper end of the device such that the flow of the second fluid or fresh water is in an opposite direction to the downward gravity flow direction of the first fluid or waste water. Having cross flow of the fluids may improve the heat transfer between the fluids.

An advantage of a further preferred embodiment of the invention involves tangential inlets and outlets for the second fluid, which is typically under pressure. This assists in maintaining the pressure in the second fluid while entering and exiting the second conduit to avoid excessive pressure loss in the system. Furthermore, the tangential inlet and outlet create a spiral path in the inlet and outlet cavities and the second conduit which improves the heat exchange.

In a further preferred embodiment, the second conduit is concentric with the first conduit and radially separated therefrom by a predetermined distance. The second conduit has an external tube which is preferably not highly heat conductive. In a preferred embodiment, the outer wall of the second conduit may be constructed of a plastic material, such as a polyvinyl chloride (PVC), which may be considered a thermally insulating material. The inner conduit and the leak channels preferably extends in a longitudinal direction a distance below the outer wall of the second conduit to permit any fluid in the leak channels to be detected. In a preferred embodiment, the leak channels extend axially beyond the second conduit such that the leak fluid may be detected.

Further aspects of the invention will become apparent upon reading the following detailed description and drawings, which illustrate the invention and preferred embodiments of the invention.

BRIEF DESCRIPTION OF THE DRAWINGS

In the drawings, which illustrate embodiments of the invention:

**Figure 1a** is a perspective view of the heat exchanging device according to one embodiment of the present invention.

**Figure 1b** is a perspective view of the heat exchanging device shown in **Figure 1a** with a portion of the external tube, the fresh water inlet vortex inducer, and the fresh water outlet vortex reducer cut-out for illustration purposes.

**Figure 2** is an enlarged fragmentary view of an upper end of the heat exchanging device shown in **Figure 1b**.

**Figure 3** is a side view of the heat exchanging device with the flow of the waste water and fresh water into and out of the device shown.

**Figure 4** is a cross-sectional view of the double wall construction of the first conduit having a portion of the outer wall removed for illustration purposes.

**Figure 5** is a perspective view of a lower end of the heat exchanging device and the waste water outlet illustrating leak fluid which may be detected.

**Figure 6a** is a perspective fragmentary view of the second conduit with the external tube shown transparently to illustrate the flow of the fresh water fluid through the baffle system between the outer surface of the outer wall and the inner surface of the external tube.

**Figure 6b** is an enlarged side view of a portion of the baffle system illustrating the interleaved cylindrical loops and longitudinal bars of the baffle system according to a preferred embodiment.

**Figure 6c** is a baffle system according to a preferred embodiment prior to installation to the second conduit.

**Figure 7** is a fragmentary top view of the device prior to installation showing the inner surface of the inner wall of the first conduit.

**Figure 8** is a perspective view of the fresh water outlet vortex reducer with a top portion and connection to the first conduit removed to illustrate the internal outlet cavity, and, it is understood in a preferred embodiment, the fresh water inlet vortex inducer has an identical shape to the fresh water outlet vortex reducer, but a different function, whether they are connected to the first end and/or the second end of the second conduit.

**Figure 9** illustrates the inlet fluid at the lower end of the heat exchanging device having a mechanical joint coupling connection between the first conduit of the heat exchanging device and a drain pipe of a plumbing system.

**Figure 10** is a systematic drawing of a portion of a plumbing system, including a hot water tank, to illustrate the connection of the heat exchanging device of the present invention to the plumbing system according to one preferred embodiment of the invention.

**Figure 11** illustrates a top view of the baffle system according to one preferred embodiment of the invention.

**Figure 12** illustrates a partial enlarged side view of baffle channel slots of the baffle system according to one preferred embodiment.

DETAILED DESCRIPTION OF THE PREFERRED EMBODIMENTS

The present invention relates to a heat exchanging device which can exchange heat from a first fluid to a second fluid. In preferred embodiments, the heat exchanging device is used to exchange heat from a waste water fluid at a first inlet temperature to a fresh water fluid at a second inlet temperature, lower than the first temperature, thereby recovering heat from the waste water fluid before it is expelled from the plumbing system.

In a preferred embodiment, the heat exchanging device has a first conduit for conveying the first fluid, and, a second conduit, concentrically located about the first conduit, for conveying the second fluid between the outer surface of the first conduit and the inner surface of an external tube. The first conduit includes a double wall construction with an inner wall and an outer wall. The first fluid is in thermal contact with the second fluid through the double wall of the first conduit to transfer heat from the first fluid to the second fluid. The double wall construction of the first conduit ensures that there is no shared boundary between the first fluid and the second fluid, and in particular, between the waste water fluid and the fresh water fluid in this preferred embodiment.

To detect a potential breach between the first and second fluids, the first conduit has a plurality of leak channels between the outer wall and the inner wall. In a preferred embodiment, the leak channels extend axially beyond the second conduit so that the leak fluid may be detected. Leak fluid, constituting first fluid breaching the inner wall of the double wall first conduit and/or second fluid breaching the outer wall of the double wall first conduit will be conveyed in the leak channels to be detected.

A baffle system located in the second conduit promotes turbulent flow and therefore heat exchange between the first fluid and the second fluid. This may decrease the length of the heat exchanging device to obtain comparable heat transfer. In a preferred embodiment, the first end of the second conduit is in fluid communication with a fresh water inlet vortex inducer and the second end of the second conduit is in fluid communication with a fresh water outlet vortex reducer for streamlining the flow to decrease the pressure loss of the second fluid (which is preferably under pressure) as it enters and exits the second conduit. This may also facilitate the flow of the second fluid through the baffle system.

Preferred embodiments of the invention and its advantages can be understood by referring to the present drawings. In the present drawings, like numerals are used for like and corresponding parts of the accompanying drawings.

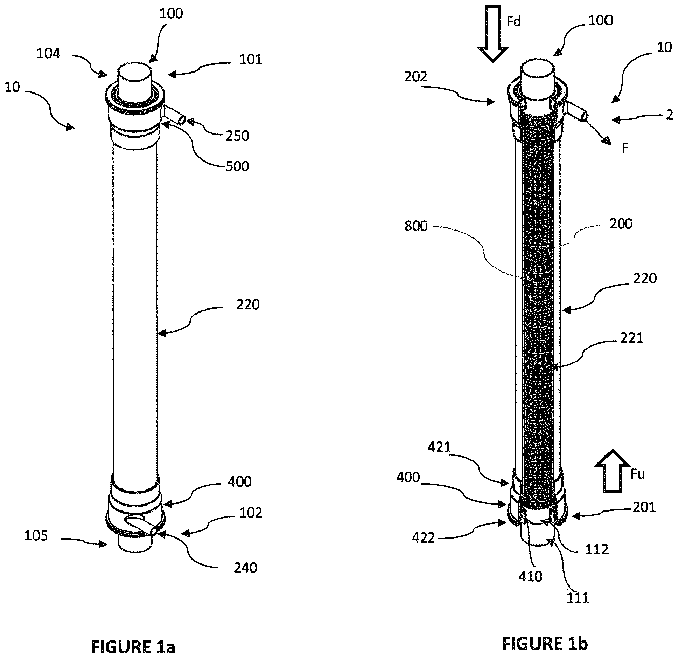

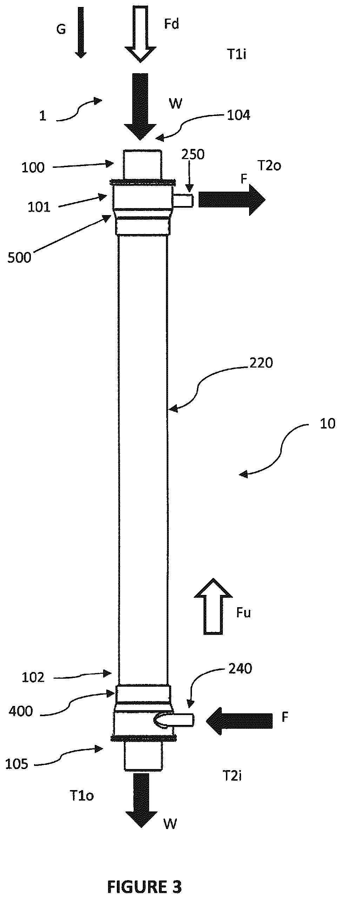

As shown in Figures 1a, 1b and 3, one embodiment of the present invention relates to a heat exchanging device, shown generally by reference numeral 10. As shown in Figures 1a, 1b and 3, the device 10 comprises a first conduit, shown generally by reference numeral 100, and a second conduit, shown generally by reference numeral 200.

In a preferred embodiment, the first conduit 100 may convey a first fluid 1 in a first direction FD from a first end 101 to a second end 102, longitudinally opposed from the first end 101, of the conduit 100. It is understood that in a preferred embodiment, the first fluid 1 may be waste water fluid W which is gravity fed through the conduit 100. In this preferred embodiment, the first direction will be a first downward direction FD, as shown for instance in Figure 3, from a waste fluid inlet 104 at the first end 101 of the first conduit 100 to a waste fluid outlet 105 at the second end 102 of the first conduit 100. Accordingly, in this preferred embodiment, the first end 101 will be at an upper or higher end than the opposed second end 102 which will be at a lower position than the first end 101 to facilitate the gravity flow. It is understood that other arrangements are possible where the first end 101 is opposed from the second end 102, but not necessarily higher or lower.

The second conduit 200 (shown in Figure 1b) may convey a second fluid 2 in a second direction FU as shown in Figure 3. The second direction FU, in a preferred embodiment, is preferably opposite to the first direction FD of the first fluid 1 to improve heat transfer from the first fluid 1 to the second fluid 2. The second conduit 200 is defined by, at least a portion of, an outer surface 121 of an outer wall 112 of the conduit 100, and an inner surface 221 of the external tube 220 which is concentrically radially outwardly fixed from the outer wall 112 of the first conduit 100 as shown for instance in Figure 1b.

In a preferred embodiment, the second fluid 2 is fresh water fluid F conveyed under pressure in the second upward flow direction FU while it is in thermal contact with the first fluid 1. In this preferred embodiment, the waste water fluid W is conveyed through gravity G in the first conduit 100 in the first downward direction FD opposite to the second upward direction FU of the fresh water fluid F to facilitate the transfer heat from the first fluid 1 to the second fluid 2 in this particular preferred embodiment being waste water fluid W and fresh water fluid F, respectively.

In a preferred embodiment, the first fluid 1 will generally be at a first inlet temperature T1i at the inlet 104 and at a first outlet temperature T1o at the outlet 105, as shown in Figure 3. Similarly, in a preferred embodiment, the second fluid 2 will enter the device 10 at a second inlet temperature T2i, which will typically be lower than the first inlet temperature T1i of the first fluid 1, and exit the device 10 at a second outlet temperature T2o which will typically be higher than the second inlet temperature T2i of the second fluid 2 representing the heat transferred from the first fluid 1 to the second fluid 2 through the device 10. In this way, heat will be exchanged generally from the first fluid 1 to the second fluid 2 through the thermally conductive first conduit 100. In a preferred embodiment, heat will be recovered from waste water fluid W at a first inlet temperature T1i to the colder fresh water fluid F at a second inlet temperature T2i which is lower than the first inlet temperature T1i of the waste water fluid W.

More preferably, the device 10 comprises a tangential fresh water inlet 240 in fluid communication with a fresh water inlet vortex inducer 400, shown for instance in Figures 1a, 1b and 3, to receive the second fluid 2, in a preferred embodiment fresh water F under pressure, substantially tangentially to an inlet fluid cavity 410 of the first water inlet vortex inducer 400 to streamline the flow of the fresh water F and decrease pressure loss. The fresh water inlet vortex inducer 400 is in communication with a first end 201 of the second conduit 200 for receiving the fresh water fluid F from the tangential fresh water inlet 240 and directing the fresh water fluid F to the second conduit 200. Similarly, the device 10 preferably comprises a fresh water outlet vortex reducer 500 in fluid communication with a second end 202 of the second conduit 200, the second end 202 being longitudinally opposed to the first end 201, for expelling the fresh water fluid F substantially tangentially to an outlet fluid cavity 510 of the fresh water outlet vortex reducer 500, through the tangential fresh water outlet 250 to decrease potential pressure loss, and also to decrease any potential spiral vortex flow of the fresh water fluid F in the second conduit 200. The fresh water outlet vortex reducer 500 is in fluid communication with the tangential fresh water outlet 250 to expel the second fluid 2, in a preferred embodiment fresh water fluid F, at the second outlet temperature T2o.

The first conduit 100 is preferably formed of a material having a relatively high degree of thermal conductivity in order to facilitate thermal contact of the second fluid 2 conveyed in the second conduit 200 and the first fluid 1 conveyed through the first conduit 100. These materials could be most types of metals as is known in the art such as copper, copper alloy, or copper-plated aluminium or other materials with relatively high degree of thermal conductivity. Conversely, it is preferred if the external tube 220 is made of a material which preferably has a relatively low heat conductivity. For example, the external tube 220 and one or more of the fresh water inlet vortex inducer 400 and fresh water outlet vortex reducer 500 may be made of plastics, such as PVC or ABS, or other types of plastic materials to insulate the heat being transferred from the environment. Similarly, it is understood that the conduits 100, 200 should also be manufactured from materials able to withstand the corresponding pressure, temperature and in some cases chemical properties of the fluids 1, 2 that they are designed to carry.

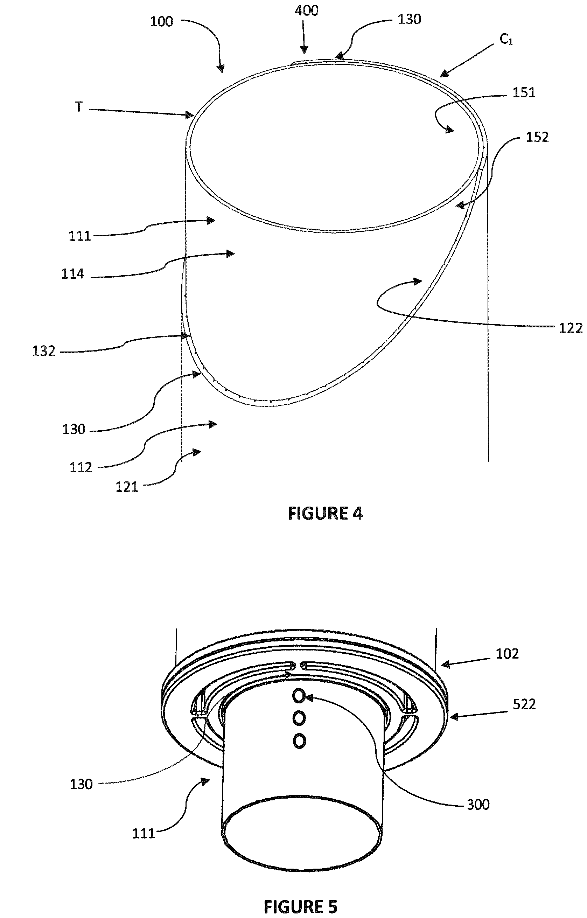

In a further preferred embodiment, the first conduit 100 includes a double wall construction, shown generally by reference numeral 110, with an inner wall 111 and an outer wall 112. Figure 4 illustrates the conduit 100 including the double wall construction 110 with a portion of the outer wall 112 removed for illustrative purposes. As illustrated in Figure 4, in a preferred embodiment, the first conduit 100 includes the double wall construction 110 with the outer wall 112 being positioned concentrically radially outwardly from the inner wall 111 and abutting thereto.

As also illustrated in Figure 4, the first conduit 100 preferably comprises a plurality of leak channels, shown generally by reference numeral 130, which are defined by the inner wall 111 and the outer wall 112. The leak channels 130 extend along the first conduit 100 in the first downward direction FD towards the lower end 102 of the first conduit 100.

During operation, any of the first fluid 1 which may breach the inner wall 111 without necessarily breaching the outer wall 112 of the first conduit 100, as well as any of the second fluid 2 which may breach the outer wall 112 without necessarily breaching the inner wall 111, results in leak fluid 300 entering the plurality of leak channels 130. It is understood the leak fluid 300 may constitute any of the first fluid 1 which has breached the inner wall 111 and/or any of the second fluid 2 which has breached the outer wall 112 of the first conduit 100. The leak fluid 300 entering one or more of the plurality of leak channels 130 is conveyed axially along the first conduit 100 facilitating detection of the leak fluid 300 and indicating of a corresponding potential breach which may have caused the leak fluid 300.

Figure 5 illustrates the leak channels 130 being exposed at the second end 102 of the first conduit 100. The plurality of leak channels 130 extend axially beyond the second conduit 200 to convey the leak fluid 300 outside of the device 10 so that the leak fluid 300, indicative of a potential breach, may be detected. The leak fluid 300 is shown in Figure 5 emanating from the leak channels 130 on the outer surface 152 of the inner wall 111 as the outer wall 112 has terminated exposing the leak channels 130 and permitting detection of the leak fluid 300.

In a preferred embodiment, the outer wall 112 and the leak channels 130 will terminate axially beyond the second conduit 200. This permits the leak fluid 300 to be conveyed beyond the second conduit 200 and be exposed for detection. This also permits the inner wall 111 to optionally continue axially beyond the second conduit 200 for connection to a plumbing system 8 to convey and expel the first fluid 1 which in a preferred embodiment is waste water fluid W.

Once the leak fluid 300 has been exposed or expelled from the leak channels 130, the leak fluid 300 may be detected in a number of ways. For example, the leak fluid 300 may be detected visually as it may drip onto objects directly below the device 10, including but not limited to a waste water pipe (not shown) of the plumbing system 8. Alternatively, the leak fluid 300 may accumulate on the floor and become detectable by most leak detection devices (not shown) which may be commonly found and are known in the art. Such leak detection devices may alert a user by setting off a visual and/or audible alarm or other visual and audible effects. The leak detection devices could also trigger a shut off valve of the plumbing system 8 which automatically prevents any further leakage and/or potential contamination of the fresh water fluid F with waste water fluid W. In any event, detection of the leak fluid 300 indicates a potential breach of the first fluid 1 and the second fluid 2 in the device 10 such that it may be attended to and further investigated, and if necessary, corrected such as through maintenance or service of the device 10 or replacement of the device 10.

In a preferred embodiment, the leak channels 130 are formed by a plurality of grooves, shown generally by reference numeral 132 in Figure 4, made on the outer surface 152 of the inner wall 111 and/or an inner surface 122 of the outer wall 112. It is understood that the grooves 132 may be on one of, or both of, the outer surface 152 of the inner wall 111 and the inner surface 122 of the outer wall 112 provided the grooves 132 in this preferred embodiment is on at least one of the surfaces 152,122. For economy of manufacture, in most cases, it is preferable if the grooves 132 are on the outer surface 152 of the inner wall 111, but it is understood this is merely one preferred embodiment.

In a preferred embodiment, the grooves 132 have a depth of about one half (½) an average thickness T of the inner wall 111 or outer wall 112 depending upon which wall 111, 112 (or both) the grooves 132 have been made. After the plurality of grooves 132 have been formed, the outer surface 152 of the inner wall 111 is fixed in abutting relation to an inner surface 122 of the outer wall 112 such that the grooves 132 define the plurality of leak channels 130 therebetween as illustrated in Figure 4. Preferably, the leak channels 130 extend longitudinally along the conduit 100 so that the leak fluid 300 will have a shortest distance possible to be exposed so that any leak fluid 300 may be detected.

In a preferred embodiment, the leak channels 130 are each spaced by less than 1.27cm (0.5 inches) and more preferably less than 0.508cm (0.2 inches) along the circumference $C_1$ of the first conduit 100. Still more preferably, in cases where the diameter $D_1$ of the first conduit 100 is about 3 inches, there will be at least 20 and more likely 50 about leak channels 130 along the circumference $C_1$ of the conduit 100. Experimentation has shown that having this ratio of leak channels 130 will maintain a minimum of 90 percent thermal contact surface to provide for heat transfer between the first fluid 1 and the second fluid 2, while at the same time permitting a relatively large number of leak channels 130 along the circumference $C_1$ of the first conduit 100 to detect a breach of the first fluid 1 through the inner wall 111 or a breach of the second fluid 2 through the outer wall 112.

The inner wall 111 may be preferably formed of a first metal inner pipe 141 and the outer wall 112 may be preferably formed of a second metal outer pipe 142. In this preferred embodiment, the double wall construction 110 of the conduit 100 may be formed by locating the first metal inner pipe 141 within the second metal outer pipe 142 and evenly applying an expansion force (not shown) radially on the inner surface 151 of the first metal inner pipe 141 to radially stretch the first metal inner pipe 141 and the second metal outer pipe 142 forming a mechanical bond therebetween with the second metal outer pipe 142 positioned concentrically radially outwardly from the first metal inner pipe 141 and abutting thereto, defining the leak channels 130 therebetween.

In a further preferred embodiment, the first metal inner pipe 141 forming the inner wall 111 is a drain waste vent (DWV) copper pipe with the grooves 132 extending along the outer surface 152 thereof. In this way, the DWV copper pipe may be more easily installed into an existing plumbing system 8. In this case, the second metal outer pipe 142 may be a standard Type L or light copper pipe.

In the preferred embodiment where the first fluid 1 is waste water fluid W and the first metal inner pipe 141 forming the inner wall 111 is a drain waste vent (DWV) copper pipe, it will generally have a diameter $D_1$ of 5.08cm to 10.16cm (2 to 4 inches) and more likely 7.62cm (3 inches). In the case where the DWV pipe is 7.62cm (3 inches), the circumference C1 will be:

$$3 \text{ x } \pi = 23.94\text{cm (9.425 inches)} \qquad (1)$$

In this situation, if the leak channels 130 formed by the grooves 132 are spaced less than 0.508cm (0.2inches) along the circumference $C_1$ of the first conduit 100, then this provides roughly the following number of grooves:

$$23.94\text{cm}/0.508\text{cm (8.425inches/0.2 inches)}$$
$$= 47.125 \text{ channels} \qquad (2)$$

Accordingly, in this preferred embodiment, where the first metal inner pipe 141 is a DWV copper pipe of 3 inches diameter, there will be about 40 to 50 leak channels along the circumference $C_1$ for conveying leak fluid 300. Experimentation has shown that leak channels of this type and having a depth of about 0.254cm (0.1 inches) representing one half (½) the thickness T of the DWV pipe, would present 40 to 45% heat recovery from the waste water fluid W to the fresh water fluid F. Typically, the DWV pipe may have a diameter of 5.08cm to 10.16cm (2 to 4 inches) and, extrapolating equations (1) and (2) above, there would be about

$$\frac{\pi}{0.2} \cong 15 \qquad (3)$$

or 15 grooves 132 or leak channels 130 along the circumference $C_1$ per inch of diameter $D_1$ of the inner pipe 141.

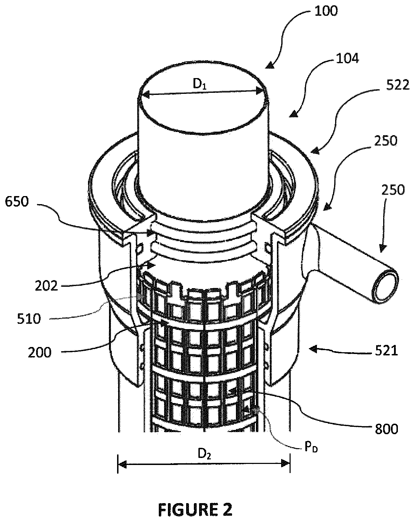

As discussed above, the second conduit 200 is defined by the outer surface 121 of the outer wall 112 of the first conduit 100 and an inner surface 221 of the external tube 220. In a preferred embodiment, the external tube 220 of the second conduit 200 is fixed a predetermined distance $P_D$ from the outer wall 112 of the first conduit 100 and the external tube 220 has a substantially constant diameter $D_2$, as shown in Figure 2. Preferably, the predetermined distance $P_D$ from the outer wall 112 of the first conduit 100 to the inner surface 221 of the external tube 220 is about equal to a diameter $D_1$ of the first conduit 100 shown in Figure 2. In this way, the thermal contact of the second fluid 2 with the first fluid 1 while the second fluid 2 is conveyed in the second conduit 200 and the first fluid 1 is conveyed in the first conduit 100 is facilitated.

In a preferred embodiment where the inner wall 111 of the first conduit 100 is formed by a first metal inner pipe 141 comprising a DWV pipe, the diameter $D_1$ will likely be 3 inches at least pursuant to most current North American Copper DWV Tube Standards for sewage applications. The inner diameter $D_2$ of the external tube 220 is determined based on the amount of fresh water fluid F needed to pass through the device 10 and its corresponding effect on pressure loss. For example, in a preferred embodiment, if the amount of fresh water fluid F required may be about 9.5 litres per minute, the diameter $D_2$ of the external tube 220 may be selected to have a maximum pressure loss within the device 10 of less than 20 KPA. It is understood, the smaller the diameter $D_2$, the greater the thermal contact which may result, however the greater the corresponding pressure loss.

In a preferred embodiment, the inlet vortex inducer 400 and outlet vortex reducer 500 fix the external tube 220 at the predetermined distance $P_D$ to the first conduit 100. The inlet vortex inducer 400 and outlet vortex reducer 500, in a preferred embodiment, have a similar construction and can actually be reciprocal components, meaning that they are identically made but connected to the external tube 220 in different orientation in order to decrease cost of manufacture and inventory. Accordingly, while the inlet vortex inducer 400 and outlet vortex reducer 500 will be discussed below separately, it is understood that preferably their structure is substantially identical.

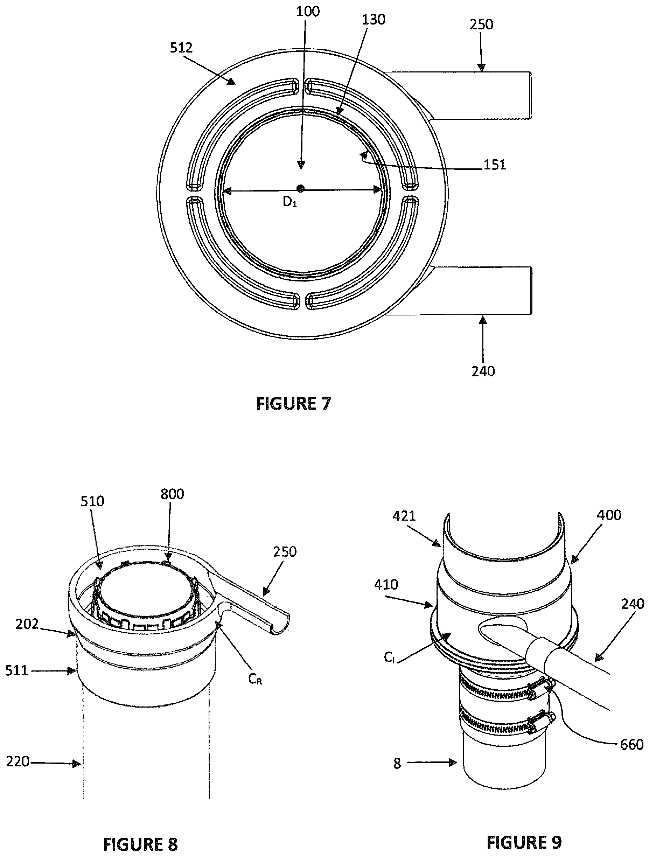

Figures 2 and 8 illustrate the outlet vortex reducer 500 according to a preferred embodiment. Figure 2 is an enlarged fragmentary view of the device 10 shown in Figure 1b focusing on the second end 202 of the conduit 200 with a portion of the external tube 220 and fresh water outlet vortex reducer 500 removed for illustration purposes. Figure 8 is a perspective view of the fresh water outlet vortex reducer 500 with a top portion and connection to the first conduit 100 removed to illustrate the internal outlet fluid cavity 510. It is understood that the internal features of the outlet fluid cavity 510 are similar to the internal features of the inlet fluid cavity 410. The inlet vortex inducer 400 is also shown in Figure 9, but not in cut out.

As illustrated in these figures, in a preferred embodiment, the inlet vortex inducer 400 and the outlet vortex reducer 500 each have a substantially cylindrical shape and extend axially at least along a portion of the first conduit 100. The fresh water inlet vortex inducer 400 defines an inlet fluid cavity 410 in fluid communication with the first end 201 of the second conduit 200 and also with the tangential inlet 240. As illustrated in Figures 2 and 8, the outlet vortex reducer 500 also has a substantially cylindrical shape defining an outlet fluid cavity 510 with the tangential outlet 250 extending substantially tangentially from the circumference $C_R$ of the outlet vortex reducer 500.

In this way, the second fluid 2, which in a preferred embodiment is the fresh water fluid F under pressure, may enter the fresh water tangential inlet 240 and be received within the inlet fluid cavity 410 which is in fluid communication with the tangential inlet 240. The fresh water fluid F may then be directed by the inlet fluid cavity 410 to the first end 201 of the second conduit 200 from the fresh water tangential inlet 240. As the fresh water tangential inlet 240 extends substantially tangentially from the circumference $C_1$ of the inlet fluid cavity 410 of the fresh water inlet vortex inducer 400, the fresh water fluid F may be tangentially directed under pressure from the tangential fresh water inlet 240 to the first end 201 of the second conduit 200 formed by the inner surface 221 of the external tube 220 and the outer surface 121 of the outer wall 112 of the first conduit 100. This provides a preferred streamline flow of the fresh water fluid F into the device 10 and more specifically in the second conduit 200. This also facilitates the generation of a vortex or spiral path of the fresh water fluid F within the inlet fluid cavity 410 of the fresh water inlet vortex inducer 400 which promotes the transfer of heat. In this preferred embodiment, a portion of the first conduit 100 is axially coincident with the inlet fluid cavity 410 and the fresh water fluid F under pressure to facilitate heat transfer.

Similarly, at the second end 202 of the second conduit 200, the fresh water outlet vortex reducer 500 having a substantially cylindrical shape and defining the outlet fluid cavity 510 is in fluid communication with the second end 202 of the second conduit 200 and receives the fresh water fluid F from the second end 202 of the second conduit 200 after it has come into thermal contact though the first conduit 100 conveying the waste water fluid W. The fresh water outlet vortex reducer 500 will then expel the fresh water fluid F substantially tangentially to the circumference $C_R$ of the outlet fluid cavity 510 to the fresh water outlet vortex reducer 500 and in so doing decrease the vortex spiral flow of the fresh water fluid F being expelled from the second end 202 of the second conduit 200 and provide streamline flow to decrease any potential loss of pressure.

The fresh water inlet vortex inducer 400 also includes a first connection 421 and a second connection 422 on opposite sides of the inlet fluid cavity 410. Similarly, the fresh water outlet vortex reducer 500 includes a first connection 521 and a second connection 522 on opposite sides of the outlet fluid cavity 510. As illustrated in Figures 2 and 8, the first connections 421, 521 are adapted to connect the inlet vortex inducer 400 and outlet vortex reducer 500 to the external tube 220 at the first end 201 of the first conduit 100 and at the second end 202 of the second conduit 200, respectively. The second connection 422, 522 of the fresh water inlet vortex inducer 400 and fresh water outlet vortex reducer 500 are adapted to connect the fresh water inlet vortex inducer 400 and fresh water outlet vortex reducer 500, respectively, to an exterior surface 121 of the outer wall 112 of the first conduit 100 axially near the waste water outlet 105 and the waste water inlet 104, respectively. As indicated above, the inlet fluid cavity 410 and the outlet fluid cavity 510 extend longitudinally along at least a portion of the outer wall 112 of the first conduit 100 from their respective first connection 421, 521 to their respective second connection 422, 522 to further facilitate thermal contact and heat transfer from between the fluids 1, 2.

In a preferred embodiment, as also illustrated in the figures, the second connections 422, 522 of the fresh water inlet vortex inducer 400 and fresh water outlet vortex reducer 500, respectively, may also comprise O-rings, shown generally by reference numeral 650 for example in Figures 1b and 2. The O-rings 650 facilitate positioning and sealing of the vortex inducer 400 and the vortex reducer 500 and therefore the external tube 220 and the second conduit 200 with respect to the first conduit 100. This permits efficient retro fitting of the heat exchanging device 10 to existing drain water lines. Furthermore, this avoids the need for manual welding operations for the device 10 which can increase the cost of installation. Furthermore, the inlet fluid cavity 410 and the outlet fluid cavity 510 preferably have a slanted surface leading towards their respective first connections 421,521. This slanted surface assists in gradually directing the fresh water fluid F into the first end 201 and out of the second end 202, respectively, of the second conduit 200.

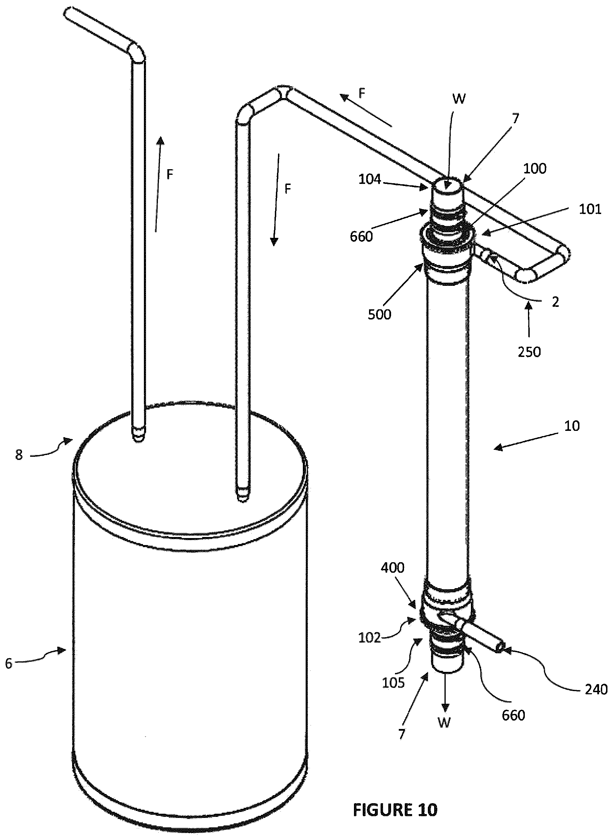

Figure 10 is a schematic drawing of a portion of a plumbing system, shown generally by reference numeral 8, including a hot water tank 6 to illustrate the connection of the heat exchanging device 10 to the plumbing system 8 according to one preferred embodiment of the present invention. As illustrated in Figure 10, a portion of the existing drain water vent pipe, shown partially by reference numeral 7, is connected through a mechanical joint connection 660 to the first conduit 100 at the first end 101. There is a corresponding connection back to the drain water vent pipe 7 of the system 8 at the second end 102 of the first conduit 100. In a preferred embodiment where the first fluid 1 is waste water fluid W, it will enter through the existing DWV pipe 7 and exit through the continuation of the DWV pipe 7 at the second end 102 after being expelled from the waste water fluid outlet 105. Figure 9 illustrates a fragmentary view of the lower end 102 of the device 10 and the mechanical joint (MJ) coupling 660 between the first conduit 100, (and in a preferred embodiment the inner wall 111 of the first conduit 100) to the DWV drain pipe 7 of the plumbing system 8.

Similarly, the tangential fresh water inlet 240 will receive the fresh water fluid F which will pass though the device 10 and exit through the fresh water outlet 250 where the fresh water fluid F is shown as continuing through the plumbing system 8 to the hot water tank 6. It is understood that the second outlet temperature T2o will be higher than the second inlet temperature T2i representing the heat transferred from the waste water fluid W to the fresh water fluid F. This transfer of heat represents an effective cost savings because the hot water tank 6 would not need to heat the fresh water fluid F by that temperature difference. Similarly, if the device 10 is operational, it is likely that there is a user of the plumbing system 8 drawing fresh water fluid F from the hot water tank 6. In other words, fresh water fluid F will be entering the tangential inlet 240 precisely because hot water is being used and therefore warmer waste water fluid W will be entering the drain water inlet 104.

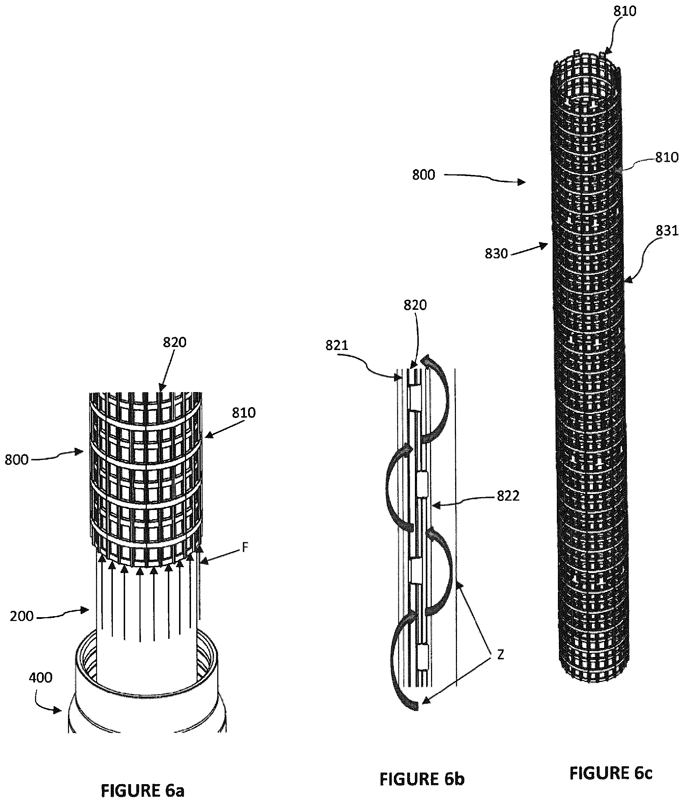

In a further preferred embodiment, the device 10 comprises a baffle system shown generally by reference numeral 800 in Figures 1b, 2 and in enlarged and fragmentary views in Figures 6a, 6b, 6c, 11 and 12. The baffle system 800 is located within the second conduit 200 and extends from the fresh water inlet vortex inducer 400 (see Figures 1b and 6a) to the fresh water outlet vortex reducer 500. The baffle system 800 preferably has a plurality of interleaved cylindrical hoops 810 and longitudinal bars 820 forming a cylindrical mesh, shown generally by reference 830 in Figure 6c. The cylindrical mesh 830 has a number of baffle channel slots 833 formed by the plurality of interleaved cylindrical hoops 810 and longitudinal bars 820 with the hoops 810 being alternatingly connected to a radial outer surface 822 and a radial inner surface 821 of the longitudinal bars 820 as shown in Figure 6b. This forms a zig zag flow path, shown generally by reference numeral Z in figure 6b, extending longitudinally within the second conduit 200 from the first end 201 to the second end 202 and between the outer surface 121 of the outer wall 112 of the first conduit 100 and the inner surface 221 of the external tube 220.

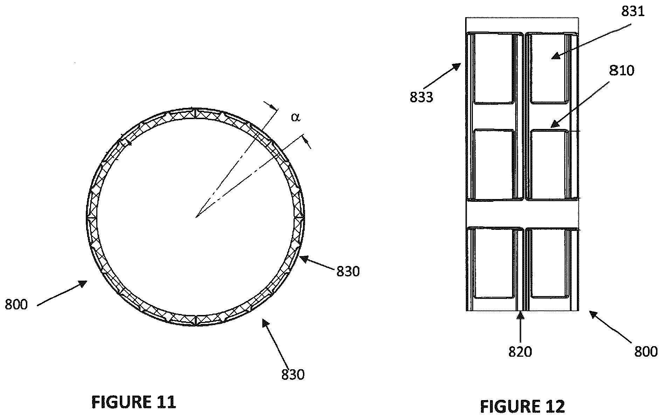

Figure 11 illustrates a top view of the baffle system 800 according to one preferred embodiment and Figure 12 shows a partial enlarged side view of a few baffle channel slots 833 of the baffle system 800. The baffle channel slots 833 are preferably about 1.27cm to 1.778cm (0.5 inches to 0.7 inches) in length and may have a width of 0.762cm to 1.016cm (0.3 inches to 0.4 inches). Preferably, the slots 833 have a width that is about twice the width of the hoops 810 which is about 0.508cm to 0.762cm (0.2 to 0.3 inches). This facilitates the zig zag flow Z of the second fluid 2.

As illustrated in Figure 11, the slots 833 are preferably separated by an angle $\alpha$ which can be 10 degrees to 20 degrees and more preferably 15 degrees. This permits about 24 baffle channel slots 833 to be oriented about the mesh 830 to facilitate the zig-zag Z flow path and corresponding heat transfer from the first fluid 1 to the second fluid 2 through the double wall 110 of the first conduit 100. In particular, the use of the baffle system 800 increases the heat transfer between the first fluid 1 and the second fluid 2 over the same longitudinal length of the device 10. In this way, the overall longitudinal length of the device 10 may be lessened with the use of a baffle system 800 as illustrated and described herein.

Although this disclosure has described and illustrated certain preferred embodiments of the invention, it is to be understood that the invention is not restricted to these particular embodiments. Rather, the invention and the scope thereof is defined in the appended claims.

**Claims**

1. A heat exchanging device for exchanging heat from a first fluid to a second fluid, said heat exchange device comprising:

   a first conduit for conveying the first fluid in a first flow direction, said first conduit including a double wall construction with an inner wall and outer wall, said outer wall positioned concentrically radially outwardly from the inner wall and fixed thereto defining a plurality of leak channels there between;
   a second conduit for conveying the second fluid in a second flow direction, said second conduit including at least a portion of an outer surface of the outer wall of the first conduit providing thermal contact between the second fluid in the second conduit and the first fluid in the first conduit to exchange heat between the first fluid in the first conduit and the second fluid in the second conduit;
   the heat exchange device being **characterized by** said channels extending longitudinally along the first conduit in the first flow direction and by one or more of the plurality of leak channels extending beyond the second conduit so that in case of the first fluid breaching the inner wall without necessarily breaching the outer wall, and, the second fluid breaching the outer wall without necessarily breaching the inner wall, results in leak fluid, constituted by any first fluid that has breached the inner wall, or, any second fluid that has breached the outer wall, entering one or more of the plurality of leak channels, said leak fluid will be conveyed axially along the first conduit in said one or more of the plurality of leak channels axially beyond the second conduit to facilitate detection.

2. A heat exchanging device, according to claim 1, for exchanging heat from a waste water fluid at a first inlet temperature to a fresh water fluid at a second inlet temperature, lower than the first inlet temperature, said heat exchanging device comprising:

   a first conduit for conveying the waste water fluid through gravity flow in a first downward flow direction from a waste water fluid inlet at an upper end of the first conduit to a waste water fluid outlet at a lower end of the first conduit, said first conduit including a double wall construction with an inner wall and outer wall, said outer wall positioned concentrically radially outwardly from the inner wall and abutting thereto defining a plurality of leak channels there between, said leak channels extending longitudinally along the first conduit in the first downward flow direction towards the lower end of the first conduit;
   a second conduit for conveying the fresh water fluid in a second upward flow direction, opposite to the first downward flow direction, said second conduit defined by an outer surface of the outer wall of the first conduit and an inner surface of an external tube concentrically radially outwardly fixed from the outer wall of the first conduit, wherein the fresh water fluid is conveyed under pressure in the second upward flow direction while in thermal contact with the waste water fluid through the double wall of the first conduit to transfer heat from the waste water fluid to the fresh water fluid;
   wherein in use, any waste water fluid breaching the inner wall without necessarily breaching the outer wall, and, any fresh water fluid breaching the outer wall without necessarily breaching the inner wall, results in leak fluid, constituted by any waste fluid that has breached the inner wall or any fresh fluid that has breached the outer wall, entering one or more of the plurality of leak channels and being conveyed axially along the first conduit by gravity in the first downward direction axially beyond the second conduit to facilitate detection of the leak fluid.

3. The heat exchanging device as defined in claim 1 or 2 wherein the leak channels are formed by grooves, preferably by a plurality of grooves, made on at least one of an outer surface of the inner wall or an inner surface of the outer wall, wherein, after the grooves have been formed, the inner wall is fixed in abutting relation to the outer wall to define the plurality of leak channels, wherein preferably the outer surface of the inner wall is fixed in abutting relation to the inner surface of the outer wall such that the grooves define the plurality of leak channels.

4. The heat exchanging device as defined in claim 3 wherein the inner wall is formed of a first metal inner pipe and the outer wall is formed of a second metal outer pipe, wherein the first metal inner pipe and the second metal outer pipe are selected to be thermally conductive, and, wherein said grooves are made on an outer surface of the first metal inner pipe such that when the outer surface of the first metal inner pipe is fixed in abutting relation to the inner surface of the second metal outer pipe, the grooves on the outer surface of the first inner pipe and the abutting inner surface of the second metal outer pipe define the plurality of leak channels.

5. The heat exchanging device as defined in claim 4 wherein the plurality of leak channels extend longitudinally along the first conduit and are spaced by less than 0.5 inches along the circumference of the first conduit, said plurality of grooves having a depth of about one half an average thickness of the first metal inner pipe, such that, when the first metal inner pipe is fixed in abutting relation to the second metal outer pipe, the outer surface of the inner pipe and the abutting inner surface of the outer pipe define the plurality of leak channels therebetween.

6. The heat exchanging device as defined in claim 5 wherein the first fluid is waste fluid and the first metal inner pipe forming the inner wall comprises a drain waste vent (DWV) copper pipe with grooves extending along the outer surface thereof to define the leak channels, preferably such that the grooves on the outer surface of the DWV copper pipe forming said plurality of grooves and the abutting inner surface of the second copper pipe define the plurality of leak channels;

    wherein the first metal inner pipe forming the inner wall extends axially below the external tube of the second conduit to facilitate connection of the DWV copper pipe to a plumbing system; and
    wherein the second metal outer pipe forming the outer wall and the plurality of leak channels terminate axially below the external tube of the second conduit in the first downward flow direction to expose the leak channels permitting detection of the leak fluid.

7. The heat exchanging device as defined in claim 6 wherein the DWV pipe has a diameter of 5.08cm to 11.16cm (2 to 4 inches) and the plurality of grooves are made on an outer surface of the DWV copper pipe spaced by less than 5.08mm(0.2 inches) with a depth of about one half an average thickness of the DWV pipe, such that there are about 15 grooves along the circumference per inch of diameter of the DWV pipe.

8. The heat exchanging device as defined in claim 2 wherein the first conduit extends substantially longitudinally vertically from the upper end of the first conduit to the lower end of the first conduit to facilitate gravity flow of the waste fluid in the first conduit and gravity flow of the leak fluid in the leak channels;
wherein the external tube of the second conduit is fixed a predetermined distance from the outer wall of the first conduit to facilitate thermal contact of the fresh water fluid with the waste water fluid while the fresh water fluid is conveyed within the second conduit and the waste water fluid is being conveyed in the first conduit.

9. The heat exchanging device as defined in claim 8 further comprising:

    a fresh water tangential inlet for receiving the fresh water fluid, and a fresh water tangential outlet for expelling the fresh water fluid;
    a fresh water inlet vortex inducer having a substantially cylindrical shape and defining an inlet fluid cavity in fluid communication with a first end of the second conduit and the fresh water tangential inlet, said fresh water tangential inlet extending substantially tangentially from a circumference of the fresh water inlet vortex inducer and tangentially directing the fresh water fluid under pressure from the fresh water inlet to the first end of the second conduit formed by the inner surface of the external tube and the outer surface of the outer wall of the first conduit;
    a fresh water outlet vortex reducer having a substantially cylindrical shape and defining an outlet fluid cavity in fluid communication with a second end of the second conduit, said second end longitudinally opposed to the first end, for receiving the fresh water fluid from the second end of the second conduit and expelling the fresh water fluid substantially tangentially to a circumference of the fresh water outlet vortex reducer to the fresh water outlet.

10. The heat exchanging device as defined in claim 9 wherein the fresh water inlet vortex inducer includes a first connection and a second connection on opposite sides of the inlet fluid cavity, said first connection being adapted to connect the fresh water inlet vortex inducer to the external tube at the first end of the second conduit, and, the second connection being adapted to connect the fresh water inlet vortex inducer to the outer surface of the outer wall of the first conduit axially near the waste water outlet such that the inlet fluid cavity extends longitudinally along the outer wall of the first conduit from the first connection to the second connection; and
wherein said fresh water outlet vortex reducer includes a first connection and a second connection on opposite sides of the outlet fluid cavity, said first connection being adapted to connect the fresh water outlet vortex reducer to the external tube at the second end of the second conduit, and, the second connection being adapted to connect the fresh water outlet vortex reducer to the outer surface of the outer wall of the first conduit axially near the waste water inlet such that the outlet fluid cavity extends longitudinally along the outer wall of the first conduit from the first connection to the second connection.

11. The heat exchanging device as defined in claim 9 further comprising:
a baffle system located within the second conduit and extending from the fresh water inlet vortex inducer to the fresh water outlet vortex reducer, said baffle system having a plurality of interleaved cylindrical hoops and longitudinal bars forming a cylindrical mesh with said hoops alternatingly connected to radially outer and inner surfaces of the longitudinal bars to form a zig-zag flow path longitudinally within the second conduit from the first end of the second conduit to the second end of the second conduit and between the outer surface of the outer wall of the first conduit and the inner wall of the external tube.

12. The heat exchanging device as defined in claim 1 or 2 further comprising an external tube concentrically radially outwardly fixed to the first conduit, said second conduit defined by the outer surface of the outer wall of the first conduit and an inner surface of the external tube, wherein the second fluid is fresh water under pressure and said second conduit comprises a fresh water inlet for receiving the fresh water, and, a fresh water outlet for expelling the fresh water;

wherein the first fluid is waste fluid and the first conduit comprises a waste fluid inlet for receiving waste fluid, and, a waste fluid outlet for expelling the waste fluid, said waste fluid outlet mechanically connectable to a downstream waste water pipe;
wherein the leak channels extend axially beyond the external tube to expose the leak fluid axially beyond the external tube and permit detection of the leak fluid.

13. The heat exchanging device as defined in claim 12 further comprising:

a fresh water inlet vortex inducer having a substantially cylindrical shape and defining an inlet fluid cavity in fluid communication with a first end of the second conduit and the fresh water inlet, said fresh water inlet extending substantially tangentially from a circumference of the fresh water inlet vortex inducer and tangentially directing the fresh water under pressure from the fresh water inlet to the first end of the second conduit formed by the inner surface of the external tube and the outer surface of the outer wall of the first conduit;
a fresh water outlet vortex reducer having a substantially cylindrical shape and defining an outlet fluid cavity in fluid communication with a second end of the second conduit, said second end longitudinally opposed to the first end, for receiving the fresh water from the second end of the second conduit and expelling the fresh water substantially tangentially to a circumference of the fresh water outlet vortex reducer to the fresh water outlet.

14. The heat exchanging device as defined in claim 13 wherein the fresh water inlet vortex inducer has a first connection and a second connection opposite the first connection with the inlet cavity located therebetween; and
wherein said first connection is adapted to connect the fresh water inlet vortex inducer to the external tube at the first end of the second conduit, and, the second connection is adapted to connect the fresh water inlet vortex inducer to the outer surface of the outer wall of the first conduit such that the inlet fluid cavity extends longitudinally along the outer wall of the first conduit from the first connection to the second connection facilitating thermal contact between the fresh water and the waste water while the fresh water is in the fresh water inlet vortex inducer.

15. The heat exchanging device as defined in claim 13 further comprising:
a baffle system located within the second conduit and extending from the fresh water inlet vortex inducer to the fresh water outlet vortex reducer, said baffle system having a plurality of interleaved cylindrical hoops and longitudinal bars forming a cylindrical mesh with said hoops alternatingly connected to radially outer and inner surfaces of the longitudinal bars to form a zig-zag path longitudinally within the second conduit between the outer surface of the outer wall of the first conduit and the inner wall of the external tube.

**Patentansprüche**

1. Wärmetauschvorrichtung zum Austausch von Wärme von einem ersten Fluid zu einem zweiten Fluid, wobei die Wärmetauschvorrichtung umfasst:

eine erste Leitung zum Transportieren des ersten Fluids in einer ersten Strömungsrichtung, wobei die erste Leitung eine doppelwandige Konstruktion mit einer Innenwand und einer Außenwand aufweist, wobei die Außenwand konzentrisch und radial auswärts von der Innenwand angeordnet und daran befestigt ist und dazwischen eine Mehrzahl von Leckagekanälen definiert;

eine zweite Leitung zum Transportieren des zweiten Fluids in einer zweiten Strömungsrichtung, wobei die zweite Leitung mindestens einen Teil einer Außenfläche der Außenwand der ersten Leitung umfasst, der einen thermischen Kontakt zwischen dem zweiten Fluid in der zweiten Leitung und dem ersten Fluid in der ersten Leitung bereitstellt, um einen Wärmeaustausch zwischen dem ersten Fluid in der ersten Leitung und dem zweiten Fluid in der zweiten Leitung zu ermöglichen;

die Wärmetauschvorrichtung **dadurch gekennzeichnet ist, dass** sich die Kanäle in Längsrichtung entlang der ersten Leitung in der ersten Strömungsrichtung erstrecken und dass sich einer oder mehrere der Mehrzahl von Leckagekanälen über die zweite Leitung hinaus erstrecken, so dass, wenn das erste Fluid die Innenwand durchbricht, ohne notwendigerweise die Außenwand zu durchbrechen, und das zweite Fluid die Außenwand durchbricht, ohne notwendigerweise die Innenwand zu durchbrechen, dazu führt, dass Leckagefluid, die aus irgendeiner ersten Flüssigkeit besteht, die die Innenwand durchbrochen hat, oder irgendeiner zweiten Flüssigkeit, die die Außenwand durchbrochen hat, in einen oder mehrere der Mehrzahl von Leckagekanälen eintritt, wobei das Leckagefluid axial entlang der ersten Leitung in dem einen oder den mehreren der Mehrzahl von Leckagekanälen axial über die zweite Leitung hinaus transportiert wird, um die Erkennung zu erleichtern.

2. Wärmetauschvorrichtung nach Anspruch 1 zum Austauschen von Wärme von einem Abwasserfluid mit einer ersten Einlasstemperatur zu einem Frischwasserfluid mit einer zweiten Einlasstemperatur, die niedriger als die erste Einlasstemperatur ist, wobei die Wärmetauschvorrichtung umfasst:

eine erste Leitung zum Transportieren des Abwasserfluids durch Schwerkraftströmung in einer ersten Abwärtsströmungsrichtung von einem Abwasserfluideinlass an einem oberen Ende der ersten Leitung zu einem Abwasserfluidauslass an einem unteren Ende der ersten Leitung, wobei die erste Leitung eine doppelwandige Konstruktion mit einer Innenwand und einer Außenwand aufweist, wobei die Außenwand konzentrisch und radial auswärts von der Innenwand angeordnet ist und an dieser anliegt und dazwischen eine Mehrzahl von Leckagekanälen definiert, wobei sich die Leckagekanäle in Längsrichtung entlang der ersten Leitung in der ersten Abwärtsströmungsrichtung zum unteren Ende der ersten Leitung erstrecken;

eine zweite Leitung zum Transportieren des Frischwasserfluids in einer zweiten Aufwärtsströmungsrichtung, die der ersten Abwärtsströmungsrichtung entgegengesetzt ist, wobei die zweite Leitung durch eine Außenfläche der Außenwand der ersten Leitung und eine Innenfläche eines externen Rohrs definiert ist, das konzentrisch radial auswärts von der Außenwand der ersten Leitung befestigt ist, wobei das Frischwasserfluid unter Druck in der zweiten Aufwärtsströmungsrichtung transportiert wird, während es in thermischem Kontakt mit dem Abwasserfluid durch die Doppelwand der ersten Leitung steht, um Wärme von dem Abwasserfluid auf das Frischwasserfluid zu übertragen;

wobei im Gebrauch jedes Abwasserfluid, das die Innenwand durchbricht, ohne notwendigerweise die Außenwand zu durchbrechen, und jedes Frischwasserfluid, das die Außenwand durchbricht, ohne notwendigerweise die Innenwand zu durchbrechen, dazu führt, dass Leckagefluid, das durch jedes Abwasserfluid, das die Innenwand durchbrochen hat, oder jedes Frischfluid, das die Außenwand durchbrochen hat, gebildet wird, in einen oder mehrere der Mehrzahl von Leckagekanälen eindringt und axial entlang der ersten Leitung durch die Schwerkraft in der ersten Abwärtsrichtung axial über die zweite Leitung hinaus befördert wird, um die Erfassung des Leckagefluids zu erleichtern.

3. Wärmetauschvorrichtung nach Anspruch 1 oder 2, wobei die Leckagekanäle durch Nuten, vorzugsweise durch eine Mehrzahl von Nuten, gebildet werden, die auf mindestens einer Außenfläche der Innenwand oder einer Innenfläche der Außenwand ausgebildet sind, wobei die Innenwand nach dem Ausbilden der Nuten in anliegender Beziehung zur Außenwand befestigt wird, um die Mehrzahl von Leckagekanälen zu definieren, wobei vorzugsweise die Außenfläche der Innenwand in anliegender Beziehung zur Innenfläche der Außenwand befestigt wird, so dass die Nuten die Mehrzahl von Leckagekanälen definieren.

4. Wärmetauschvorrichtung nach Anspruch 3, wobei die Innenwand aus einem ersten metallischen Innenrohr und die Außenwand aus einem zweiten metallischen Außenrohr gebildet ist, wobei das erste metallische Innenrohr und das zweite metallische Außenrohr so ausgewählt sind, dass sie wärmeleitend sind, und, wobei die Nuten auf einer Außenfläche des ersten metallischen Innenrohrs derart ausgebildet sind, dass, wenn die Außenfläche des ersten metallischen Innenrohrs in anliegender Beziehung zur Innenfläche des zweiten metallischen Außenrohrs befestigt ist, die Nuten auf der Außenfläche des ersten Innenrohrs und die anliegende Innenfläche des zweiten metallischen Außenrohrs die Mehrzahl von Leckagekanälen definieren.

5. Wärmetauschvorrichtung nach Anspruch 4, wobei sich die Mehrzahl von Leckagekanälen in Längsrichtung entlang der ersten Leitung erstrecken und um weniger als 0,5 Inch entlang des Umfangs der ersten Leitung beabstandet sind, wobei die Mehrzahl von Nuten eine Tiefe von etwa der Hälfte der durchschnittlichen Dicke des ersten metallischen Innenrohrs aufweisen, so dass, wenn das erste metallische Innenrohr in anliegender Beziehung zum zweiten metallischen Außenrohr befestigt ist, die Außenfläche des Innenrohrs und die anliegende Innenfläche des Außenrohrs dazwischen die Mehrzahl von Leckagekanälen definieren.

6. Wärmetauschvorrichtung nach Anspruch 5, wobei das erste Fluid ein Abfallfluid ist und das erste metallische Innenrohr, das die Innenwand bildet, ein Kupferrohr für Drainage, Abwasser und Belüftung (Drain, Drain, Ventilate, DWV) mit Nuten umfasst, die sich entlang seiner Außenfläche erstrecken, um die Leckagekanäle zu definieren, vorzugsweise so, dass die Nuten auf der Außenfläche des DWV-Kupferrohrs, die die Mehrzahl von Nuten bilden, und die anliegende Innenfläche des zweiten Kupferrohrs die Mehrzahl von Leckagekanälen definieren;

wobei das erste metallische Innenrohr, das die Innenwand bildet, sich axial unter das Außenrohr der zweiten Leitung erstreckt, um den Anschluss des DWV-Kupferrohrs an ein Rohrleitungssystem zu erleichtern; und wobei das zweite metallische Außenrohr, das die Außenwand bildet, und die Mehrzahl von Leckagekanälen axial unterhalb des Außenrohrs der zweiten Leitung in der ersten Abwärtsströmungsrichtung enden, um die Leckagekanäle freizulegen, was die Erkennung des Leckagefluids ermöglicht.

7. Wärmetauschvorrichtung nach Anspruch 6, wobei das DWV-Rohr einen Durchmesser von 5,08 cm bis 11,6 cm (2 bis 4 Inch) hat und die Mehrzahl von Nuten auf einer Außenfläche des DWV-Kupferrohrs in einem Abstand von weniger als 5,08 mm (0,2 Inch) mit einer Tiefe von etwa der Hälfte der durchschnittlichen Dicke des DWV-Rohrs ausgebildet sind, so dass es etwa 15 Nuten entlang des Umfangs pro Inch Durchmesser des DWV-Rohrs ausgebildet sind.

8. Wärmetauschvorrichtung nach Anspruch 2, wobei sich die erste Leitung im Wesentlichen in Längsrichtung vertikal vom oberen Ende der ersten Leitung zum unteren Ende der ersten Leitung erstreckt, um den Schwerkraftfluss des Abfallfluids in der ersten Leitung und den Schwerkraftfluss des Leckagefluids in den Leckagekanälen zu erleichtern; wobei das äußere Rohr der zweiten Leitung in einem vorbestimmten Abstand von der Außenwand der ersten Leitung befestigt ist, um den thermischen Kontakt des Frischwasserfluids mit dem Abwasserfluid zu erleichtern, während das Frischwasserfluid in der zweiten Leitung und das Abwasserfluid in der ersten Leitung transportiert wird.

9. Wärmetauschvorrichtung nach Anspruch 8 ferner umfassend:

einen tangentialen Frischwassereinlass zur Aufnahme des Frischwasserfluids und einen tangentialen Frischwasserauslass zum Abgeben des Frischwasserfluids; einen Frischwassereinlasswirbelinduktor mit einer im Wesentlichen zylindrischen Form, der einen Fluideinlasshohlraum definiert, der in Fluidverbindung mit einem ersten Ende der zweiten Leitung und dem tangentialen Frischwassereinlass steht, wobei sich der tangentiale Frischwassereinlass im Wesentlichen tangential von einem Umfang des Frischwassereinlasswirbelinduktors erstreckt und das unter Druck stehende Frischwasser tangential vom Frischwassereinlass zum ersten Ende der zweiten Leitung leitet, gebildet durch die Innenfläche des Außenrohrs und die Außenfläche der Außenwand der ersten Leitung; einen Frischwasserauslasswirbelreduzierer mit einer im Wesentlichen zylindrischen Form, der einen Fluidauslasshohlraum in Fluidverbindung mit einem zweiten Ende der zweiten Leitung definiert, wobei das zweite Ende dem ersten Ende in Längsrichtung gegenüberliegt, um das Frischwasserfluid vom zweiten Ende der zweiten Leitung aufzunehmen und das Frischwasserfluid im Wesentlichen tangential zu einem Umfang des Frischwasserauslasswirbelreduzierers zum Frischwasserauslass abzugeben.

10. Wärmetauschvorrichtung nach Anspruch 9, wobei der Frischwassereinlasswirbelinduktor einen ersten Anschluss und einen zweiten Anschluss auf gegenüberliegenden Seiten des Fluideinlasshohlraums aufweist, wobei der erste Anschluss so ausgelegt ist, dass er den Frischwassereinlasswirbelinduktor mit dem Außenrohr am ersten Ende der zweiten Leitung verbindet, und der zweite Anschluss so ausgelegt ist, dass er den Frischwassereinlasswirbelinduktor mit der Außenfläche der Außenwand der ersten Leitung axial in der Nähe des Abwasserauslasses verbindet, so dass sich der Fluideinlasshohlraum in Längsrichtung entlang der Außenwand der ersten Leitung von dem ersten Anschluss zu dem zweiten Anschluss erstreckt; und wobei der Frischwasserauslasswirbelreduzierer einen ersten Anschluss und einen zweiten Anschluss auf gegenüberliegenden Seiten des Fluidauslasshohlraums aufweist, wobei der erste Anschluss so ausgelegt ist, dass er den Frischwasserauslasswirbelreduzierer mit dem Außenrohr am zweiten Ende der zweiten Leitung verbindet, und wobei der zweite Anschluss so ausgelegt ist, dass er den Frischwasserauslasswirbelreduzierer mit der Außenfläche der Außenwand der ersten Leitung axial in der Nähe des Abwassereinlasses verbindet, so dass sich der Fluidauslasshohlraum in Längsrichtung entlang der Außenwand der ersten Leitung vom ersten Anschluss zum zweiten Anschluss erstreckt.

11. Wärmetauschvorrichtung nach Anspruch 9, ferner umfassend:
ein Ablenksystem, das sich in der zweiten Leitung befindet und sich vom Frischwassereinlasswirbelinduktor zum Frischwasserauslasswirbelinduktor erstreckt, wobei das Ablenksystem eine Mehrzahl von ineinandergreifenden zylindrischen Reifen und Längsstäben aufweist, die ein zylindrisches Netz bilden, wobei die Reifen abwechselnd mit den radialen Außen- und Innenflächen der Längsstäbe verbunden sind, um einen Zick-Zack-Strömungsweg in Längsrichtung innerhalb der zweiten Leitung vom ersten Ende der zweiten Leitung zum zweiten Ende der zweiten Leitung und zwischen der äußeren Oberfläche der Außenwand der ersten Leitung und der Innenwand des Außenrohrs zu bilden.

12. Wärmetauschvorrichtung nach Anspruch 1 oder 2, ferner umfassend ein externes Rohr, das konzentrisch und radial nach außen an der ersten Leitung befestigt ist, wobei die zweite Leitung durch die Außenfläche der Außenwand der ersten Leitung und eine Innenfläche des externen Rohrs definiert ist, wobei das zweite Fluid unter Druck stehendes Frischwasser ist und die zweite Leitung einen Frischwassereinlass zur Aufnahme des Frischwassers und einen Frischwasserauslass zum Abgeben des Frischwassers umfasst,

wobei das erste Fluid ein Abfallfluid ist und die erste Leitung einen Abfallfluideinlass zur Aufnahme von Abfallfluid und einen Abfallfluidauslass zum Abgeben des Abfallfluids umfasst, wobei der Abfallfluidauslass mechanisch mit einem stromabwärts gelegenen Abwasserrohr verbunden werden kann;
wobei sich die Leckagekanäle axial über das äußere Rohr hinaus erstrecken, um das Leckagefluid axial über das äußere Rohr hinaus freizulegen und den Nachweis des Leckagefluids zu ermöglichen.

13. Wärmetauschvorrichtung nach Anspruch 12 umfasst ferner:

einen Frischwassereinlasswirbelinduktor mit einer im Wesentlichen zylindrischen Form, der einen Fluideinlasshohlraum definiert, der in Fluidverbindung mit einem ersten Ende der zweiten Leitung und dem Frischwassereinlass steht, wobei sich der Frischwassereinlass im Wesentlichen tangential von einem Umfang des Frischwassereinlasswirbelinduktors erstreckt und das unter Druck stehende Frischwasser tangential vom Frischwassereinlass zum ersten Ende der zweiten Leitung leitet, die durch die Innenfläche des Außenrohrs und die Außenfläche der Außenwand der ersten Leitung gebildet wird;
einen Frischwasserauslasswirbelreduzierer mit einer im Wesentlichen zylindrischen Form, der einen Auslass-Fluidhohlraum definiert, der in Fluidverbindung mit einem zweiten Ende der zweiten Leitung steht, wobei das zweite Ende in Längsrichtung dem ersten Ende gegenüberliegt, um das Frischwasser vom zweiten Ende der zweiten Leitung aufzunehmen und das Frischwasser im Wesentlichen tangential zu einem Umfang des Frischwasserauslasswirbelreduzierers zum Frischwasserauslass abzugeben.

14. Wärmetauschvorrichtung nach Anspruch 13, wobei der Frischwassereinlasswirbelinduktor einen ersten Anschluss und einen zweiten Anschluss gegenüber dem ersten Anschluss aufweist, wobei sich der Einlasshohlraum dazwischen befindet; und
wobei die erste Verbindung so ausgelegt ist, dass sie den Frischwassereinlasswirbelinduktor mit dem Außenrohr am ersten Ende der zweiten Leitung verbindet, und die zweite Verbindung so ausgelegt ist, dass sie den Frischwassereinlasswirbelinduktor mit der Außenfläche der Außenwand der ersten Leitung verbindet, so dass sich der Fluideinlasshohlraum in Längsrichtung entlang der Außenwand der ersten Leitung von der ersten Verbindung zur zweiten Verbindung erstreckt, was den thermischen Kontakt zwischen dem Frischwasser und dem Abwasser erleichtert, während sich das Frischwasser im Frischwassereinlasswirbelinduktor befindet.

15. Wärmetauschvorrichtung nach Anspruch 13 ferner umfassend:
ein Ablenksystem, das in der zweiten Leitung angeordnet ist und sich vom Frischwassereinlasswirbelinduktor zum Frischwasserauslasswirbelinduktor erstreckt, wobei das Ablenksystem eine Mehrzahl von ineinandergreifenden zylindrischen Reifen und Längsstäben aufweist, die ein zylindrisches Netz bilden, wobei die Reifen abwechselnd mit den radialen Außen- und Innenflächen der Längsstäbe verbunden sind, um einen Zick-Zack-Weg in Längsrichtung innerhalb der zweiten Leitung zwischen der Außenfläche der Außenwand der ersten Leitung und der Innenwand des Außenrohrs zu bilden.

**Revendications**

1. Dispositif d'échange thermique pour permettre l'échange thermique d'un premier fluide à un second fluide, ledit dispositif d'échange thermique comprenant les éléments suivants :

   un premier conduit pour transporter le premier fluide dans une première direction d'écoulement, ledit premier conduit comprenant une construction à double paroi avec une paroi intérieure et une paroi extérieure, ladite paroi extérieure étant positionnée de manière concentrique et radiale, extérieure par rapport à la paroi intérieure et fixée à cette dernière, définissant une pluralité de canaux de fuite entre les deux ;
   un second conduit pour transporter le second fluide dans une seconde direction d'écoulement, ledit second conduit comprenant au moins une partie d'une surface extérieure de la paroi extérieure du premier conduit assurant un contact thermique entre le second fluide dans le second conduit et le premier fluide dans le premier conduit pour permettre un échange thermique entre le premier fluide dans le premier conduit et le second fluide dans le second conduit ;
   le dispositif d'échange thermique est **caractérisé par le fait que** lesdits canaux s'étendent de manière longitudinale le long du premier conduit dans la première direction d'écoulement et **par le fait qu'**un ou plusieurs des canaux de fuite s'étendent au-delà du second conduit de sorte que si le premier fluide traverse la paroi intérieure sans nécessairement traverser la paroi extérieure, et si le second fluide traverse la paroi extérieure sans nécessairement traverser la paroi intérieure, le fluide de fuite, constitué par tout premier fluide ayant traversé la paroi intérieure ou tout second fluide ayant traversé la paroi extérieure, pénètre dans un ou plusieurs des canaux de fuite de la pluralité de canaux de fuite, le fluide de fuite, constitué par tout premier fluide ayant franchi la paroi intérieure ou tout second fluide ayant franchi la paroi extérieure, pénètre dans un ou plusieurs des canaux de fuite, ledit fluide de fuite est transporté axialement le long du premier conduit dans ledit ou plusieurs des canaux de fuite, axialement au-delà du second conduit, afin de faciliter la détection.

2. Dispositif d'échange thermique, selon la revendication 1, permettant l'échange thermique d'un fluide d'eau usée à une première température d'entrée vers un fluide d'eau douce à une seconde température d'entrée, inférieure à la première température d'entrée, ledit dispositif d'échange thermique comprenant :

   un premier conduit pour transporter le fluide d'eaux usées par gravité dans une première direction d'écoulement descendant depuis une entrée de fluide d'eaux usées à une extrémité supérieure du premier conduit jusqu'à une sortie de fluide d'eaux usées à une extrémité inférieure du premier conduit, ledit premier conduit comprenant une construction à double paroi avec une paroi intérieure et une paroi extérieure, ladite paroi externe est positionnée de manière concentrique et radialement extérieure par rapport à la paroi interne et y touche en définissant une pluralité de canaux de fuite entre eux, lesdits canaux de fuite s'étendant de manière longitudinale le long du premier conduit dans la première direction d'écoulement vers le bas, en direction de l'extrémité inférieure du premier conduit ;
   un second conduit pour transporter le fluide d'eau douce dans une seconde direction d'écoulement vers le haut, opposée à la première direction d'écoulement vers le bas, ledit second conduit étant défini par une surface extérieure de la paroi extérieure du premier conduit et une surface intérieure d'un tube externe fixé concentriquement vers l'extérieur de la paroi extérieure du premier conduit, dans lequel le fluide d'eau douce est transporté sous pression dans la seconde direction d'écoulement vers le haut tout en étant en contact thermique avec le fluide d'eau usée à travers la double paroi du premier conduit afin de transférer la chaleur du fluide d'eau usée vers le fluide d'eau douce ;
   dans lequel, lors de l'utilisation, tout fluide d'eau usée traversant la paroi intérieure sans nécessairement traverser la paroi extérieure, et tout fluide d'eau douce traversant la paroi extérieure sans nécessairement traverser la paroi intérieure, entraîne une fuite de fluide, constituée par tout fluide usé ayant traversé la paroi intérieure ou tout fluide frais ayant traversé la paroi extérieure, pénétrant dans un ou plusieurs canaux de fuite et étant transporté axialement le long du premier conduit par gravité dans la première direction descendante axialement au-delà du second conduit pour faciliter la détection de la fuite de fluide.

3. Dispositif d'échange thermique tel que défini dans les revendications 1 ou 2, dans lequel les canaux de fuite sont formés par des rainures, de préférence par une pluralité de rainures, réalisées sur au moins une des surfaces extérieures de la paroi intérieure ou une surface intérieure de la paroi extérieure, dans lequel, après que les rainures ont été formées, la paroi intérieure est fixée en butée contre la paroi extérieure pour définir la pluralité de canaux de fuite, dans lequel de préférence la surface extérieure de la paroi intérieure est fixée en butée contre la surface intérieure de la paroi extérieure de telle sorte que les rainures définissent la pluralité de canaux de fuite.

**4.** Dispositif d'échange thermique tel que défini dans la revendication 3, dans lequel la paroi intérieure est formée d'un premier tuyau intérieur métallique et la paroi extérieure est formée d'un second tuyau extérieur métallique, dans lequel le premier tuyau intérieur métallique et le second tuyau extérieur métallique sont sélectionnés pour être thermiquement conducteurs, et, dans lequel lesdites rainures sont réalisées sur une surface extérieure du premier tuyau intérieur métallique de sorte que lorsque la surface extérieure du premier tuyau intérieur métallique est fixée en butée contre la surface intérieure du second tuyau extérieur métallique, les rainures sur la surface extérieure du premier tuyau intérieur et la surface intérieure en butée du second tuyau extérieur métallique définissent la pluralité de canaux de fuite.

**5.** Dispositif d'échange thermique tel que défini dans la revendication 4, dans lequel la pluralité de canaux de fuite s'étend de manière longitudinale le long du premier conduit et est espacée de moins de 0,5 pouce le long de la circonférence du premier conduit, ladite pluralité de rainures ayant une profondeur d'environ la moitié de l'épaisseur moyenne du premier tuyau intérieur métallique, de sorte que, lorsque le premier tuyau intérieur métallique est fixé en relation de butée avec le second tuyau extérieur métallique, la surface extérieure du tuyau intérieur et la surface intérieure de butée du tuyau extérieur définissent la pluralité de canaux de fuite entre eux.

**6.** Dispositif d'échange thermique tel que défini dans la revendication 5, dans lequel le premier fluide est un fluide résiduaire et le premier tuyau intérieur métallique formant la paroi intérieure comprend un tuyau en cuivre de drainage, d'évacuation et de ventilation (DWV) avec des rainures s'étendant le long de sa surface extérieure pour définir les canaux de fuite, de préférence de telle sorte que les rainures sur la surface extérieure du tuyau en cuivre DWV formant ladite pluralité de rainures et la surface intérieure en butée du second tuyau en cuivre définissent la pluralité de canaux de fuite ;

dans lequel le premier tuyau intérieur métallique formant la paroi intérieure s'étend axialement sous le tube extérieur du second conduit pour faciliter le raccordement du tuyau en cuivre DWV à un système de plomberie ; et dans lequel le second tube extérieur métallique formant la paroi extérieure et la pluralité de canaux de fuite se terminent axialement sous le tube extérieur du second conduit dans la première direction d'écoulement vers le bas afin d'exposer les canaux de fuite permettant la détection du fluide de fuite.

**7.** Dispositif d'échange thermique tel que défini dans la revendication 6, dans lequel le tuyau DWV a diamètre de 5,08cm à 11,16cm (2 à 4 pouces) et la pluralité de rainures sont faites sur une surface extérieure du tuyau DWV en cuivre espacées de moins de 5,08mm (0,2 pouces) avec une profondeur d'environ la moitié de l'épaisseur moyenne du tuyau DWV, de telle sorte qu'il y a environ 15 rainures le long de la circonférence par pouce de diamètre du tuyau DWV.

**8.** Dispositif d'échange thermique tel que défini dans la revendication 2, dans lequel le premier conduit s'étend sensiblement de manière longitudinale et verticale depuis l'extrémité supérieure du premier conduit à l'extrémité inférieure du premier conduit pour faciliter l'écoulement par gravité du fluide résiduaire dans le premier conduit et l'écoulement par gravité du fluide de fuite dans lesdits canaux de fuite ; le tube externe du second conduit est fixé à une distance prédéterminée de la paroi externe du premier conduit afin de faciliter le contact thermique entre le fluide d'eau fraîche et le fluide d'eau usée lorsque le fluide d'eau fraîche est transporté dans le second conduit et que le fluide d'eau usée est transporté dans le premier conduit.

**9.** Dispositif d'échange thermique défini dans la revendication 8 comprenant en outre :

une entrée tangentielle d'eau douce pour recevoir le fluide d'eau douce, et une sortie tangentielle d'eau douce pour expulser le fluide d'eau douce ; un inducteur de vortex d'entrée d'eau douce de forme sensiblement cylindrique et définissant une cavité d'entrée de fluide en communication fluide avec une première extrémité du second conduit et l'entrée tangentielle d'eau douce, ladite entrée tangentielle d'eau douce s'étendant sensiblement de manière tangentielle à partir d'une circonférence de l'inducteur de vortex d'entrée d'eau douce et dirigeant de manière tangentielle le fluide d'eau douce sous pression de l'entrée d'eau douce vers la première extrémité du second conduit formée par la surface interne du tube externe et la surface externe de la paroi externe du premier conduit ; un réducteur de vortex de sortie d'eau douce de forme sensiblement cylindrique et définissant une cavité de sortie de fluide en communication avec une seconde extrémité du second conduit, cette seconde extrémité étant opposée de manière longitudinale à la première extrémité, pour recevoir le fluide d'eau douce de la seconde extrémité du second conduit et expulser le fluide d'eau douce sensiblement de manière tangentielle à une circonférence du réducteur de vortex de sortie d'eau douce vers l'orifice de sortie d'eau douce.

**10.** Dispositif d'échange thermique tel que défini dans la revendication 9, dans lequel l'inducteur de vortex d'entrée d'eau douce comprend une première connexion et une seconde connexion sur les côtés opposés de la cavité du fluide d'entrée, ladite première connexion étant conçue pour connecter l'inducteur de vortex d'entrée d'eau douce au tube externe à la première extrémité du second conduit, et, le second raccord étant conçu pour raccorder l'inducteur de vortex d'entrée d'eau douce à la surface extérieure de la paroi extérieure du premier conduit axialement près de la sortie des eaux usées de sorte que la cavité du fluide d'entrée s'étende de manière longitudinale le long de la paroi extérieure du premier conduit depuis le premier raccord jusqu'au second raccord ; et
dans lequel ledit réducteur de vortex de sortie d'eau douce comprend une première connexion et une seconde connexion sur les côtés opposés de la cavité de fluide de sortie, ladite première connexion étant conçue pour connecter le réducteur de vortex de sortie d'eau douce au tube externe à la seconde extrémité du second conduit, et, la seconde connexion étant conçue pour connecter le réducteur de vortex de sortie d'eau douce à la surface extérieure de la paroi extérieure du premier conduit axialement près de l'entrée d'eau usée de sorte que la cavité de fluide de sortie s'étend de manière longitudinale le long de la paroi extérieure du premier conduit depuis la première connexion jusqu'à la seconde connexion.

**11.** Dispositif d'échange thermique défini dans la revendication 9 comprenant en outre :
un système de chicanes situé à l'intérieur du second conduit et s'étendant de l'inducteur de vortex d'entrée d'eau douce au réducteur de vortex de sortie d'eau douce, ce système de déflecteurs comporte plusieurs arceaux cylindriques entrelacés et des barres longitudinales formant un maillage cylindrique, ces arceaux étant alternativement reliés aux surfaces radiales extérieures et intérieures des barres longitudinales pour former une voie d'écoulement en zigzag dans le sens longitudinal à l'intérieur du second conduit, de la première à la seconde extrémité du second conduit, et entre la surface extérieure de la paroi extérieure du premier conduit et la paroi intérieure du tube externe.

**12.** Dispositif d'échange thermique tel que défini dans les revendications 1 ou 2 comprend en outre un tube externe fixé radialement de manière concentrique au premier conduit, ledit second conduit étant défini par la surface externe de la paroi externe du premier conduit et une surface interne du tube externe, dans lequel le second fluide est constitué d'eau douce sous pression et ledit second conduit comprend une entrée d'eau douce pour recevoir l'eau douce, et une sortie d'eau douce pour expulser l'eau douce ;

dans lequel le premier fluide est un fluide résiduaire et le premier conduit comprend une entrée de fluide résiduaire pour recevoir le fluide résiduaire, et une sortie de fluide résiduaire pour expulser le fluide résiduaire, cette sortie de fluide résiduaire pouvant être connectée mécaniquement à une conduite d'eau résiduaire en aval ; dans lequel les canaux de fuite s'étendent axialement au-delà du tube externe pour exposer le fluide de fuite axialement au-delà du tube externe et permettre la détection du fluide de fuite.

**13.** Dispositif d'échange thermique défini dans la revendication 12 comprenant en outre :

un inducteur de vortex d'entrée d'eau douce de forme sensiblement cylindrique et définissant une cavité d'entrée de fluide en communication fluide avec une première extrémité du second conduit et l'entrée d'eau douce, ladite entrée d'eau douce s'étendant sensiblement de manière tangentielle à partir d'une circonférence de l'inducteur de vortex d'entrée d'eau douce et dirigeant de manière tangentielle l'eau douce sous pression de l'entrée d'eau douce vers la première extrémité du second conduit formée par la surface interne du tube externe et la surface externe de la paroi externe du premier conduit ;
un réducteur de vortex de sortie d'eau douce de forme sensiblement cylindrique et définissant une cavité fluidique de sortie en communication fluidique avec une seconde extrémité du second conduit, ladite seconde extrémité étant opposée de manière longitudinale à la première extrémité, pour recevoir l'eau douce de la seconde extrémité du second conduit et expulser l'eau douce sensiblement de manière tangentielle à une circonférence du réducteur de vortex de sortie d'eau douce vers l'orifice de sortie d'eau douce.

**14.** Dispositif d'échange thermique tel que défini dans la revendication 13, dans lequel l'inducteur de vortex d'entrée d'eau douce a une première connexion et une seconde connexion opposée à la première connexion, la cavité d'entrée étant située entre les deux ; et
dans lequel la première connexion est conçue pour connecter l'inducteur de vortex d'entrée d'eau douce au tube externe à la première extrémité du second conduit, et la seconde connexion est conçue pour connecter l'inducteur de vortex d'entrée d'eau douce à la surface extérieure de la paroi extérieure du premier conduit de sorte que la cavité du fluide d'entrée s'étende de manière longitudinale le long de la paroi extérieure du premier conduit de la première connexion à la seconde connexion facilitant le contact thermique entre l'eau douce et les eaux usées lorsque l'eau douce se trouve dans l'inducteur de vortex d'entrée d'eau douce.

15. Dispositif d'échange thermique défini dans la revendication 13 comprenant en outre :
un système de chicane situé à l'intérieur du second conduit et s'étendant de l'inducteur de vortex d'entrée d'eau douce au réducteur de vortex de sortie d'eau douce, ledit système de chicane comportant une pluralité de cerceaux cylindriques entrelacés et de barres longitudinales formant un maillage cylindrique, lesdits cerceaux étant alternativement reliés aux surfaces radialement extérieures et intérieures des barres longitudinales pour former une trajectoire en zigzag de manière longitudinale à l'intérieur du second conduit entre la surface extérieure de la paroi extérieure du premier conduit et la paroi intérieure du tube externe.

FIGURE 1a

FIGURE 1b

FIGURE 2

**FIGURE 3**

**FIGURE 4**

**FIGURE 5**

**FIGURE 6a**

**FIGURE 6b**

**FIGURE 6c**

**FIGURE 7**

**FIGURE 8**

**FIGURE 9**

**FIGURE 10**

FIGURE 11

FIGURE 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017167804 A